# EUROPÄISCHE PATENTSCHRIFT

(11) **EP 3 676 560 B1**
(45) Veröffentlichungstag und Bekanntmachung des Hinweises auf die Patenterteilung: **06.12.2023**
(21) Anmeldenummer: 18793659.6
(22) Anmeldetag: 26.10.2018
(51) Int. Cl.: G01B 7/16, G01L 1/26, G01L 1/22

(54) **DEHNUNGSMESSVORRICHTUNG**
STRAIN GAUGE DEVICE
DISPOSITIF DE MESURE D'ALLONGEMENT

(30) Priorität: 27.10.2017 DE 102017125228
(43) Veröffentlichungstag der Anmeldung: 08.07.2020
(73) Patentinhaber: Octogon GmbH, 8700 Leoben (AT)
(72) Erfinder: EISL, Daniel, 8700 Leoben (AT); OTTLINGER, Matthias, 8010 Graz (AT)
(74) Vertreter: Manitz Finsterwald Patent- und Rechtsanwaltspartnerschaft mbB
(86) Internationale Anmeldenummer: PCT/EP2018/079417
(87) Internationale Veröffentlichungsnummer: WO 2019/081712

(56) Entgegenhaltungen:
- DE-A1- 2 606 753
- JP-A- 2013 134 195
- US-A- 2 416 664
- US-A- 3 222 627
- US-A- 3 853 000

## Beschreibung

Die vorliegende Erfindung betrifft ein System zum Messen einer Dehnung eines Messobjekts.

Bei vielen Bauteilen oder Messobjekten ist es notwendig, einen Sensor bereitzustellen, der dazu ausgebildet ist, eine Dehnung des entsprechenden Messobjekts zu registrieren. Bei dem Messobjekt kann es sich beispielsweise um einen Kranausleger handeln, bei welchem das Material des Kranauslegers durch eine angehobene Last verformt und somit gedehnt wird. Hierbei ist es bekannt, Sensoren zu verwenden, die Formänderungen an der Oberfläche von Messobjekten erfassen können. Diese sollen eine Bestimmung von mechanischen Spannungen ermöglichen und damit die Beanspruchung des Messobjekts erfassen.

Üblicherweise werden zur Dehnungsmessung Dehnungsmessstreifen (DMS) eingesetzt. Dehnungsmessstreifen ändern schon bei geringen Verformungen ihren elektrischen Widerstand, wodurch ein sich änderndes elektrisches Signal messbar wird. Anwendungsgebiete für den Dehnungsmesstreifen sind beispielsweise die Dehnungsmessung an Maschinen, Bauteilen, Tragwerken, Gebäuden oder Druckbehältern. Ebenso können sie die Belastung von elektronischen Waagen, Kräfte, Drehmomente, Beschleunigungen oder Drücke messen. Es können sowohl statische Belastungen als auch sich zeitlich ändernde Belastungen erfasst werden.

US3222627 A offenbart einen Folien-Dehnungsmessstreifen, insbesondere einen Widerstandsdraht- oder Folien-Dehnungsmessstreifen zur Messung von Dehnungen unter Umgebungsbedingungen, die normalerweise eine schädliche Wirkung auf den Dehnungsmessstreifen-Faden oder dessen Halterungen haben. Ein metallisches Gehäuse wird an den Prüfling geschweißt, um einen geschweißten Bereich zu schaffen, der denselben Umriss hat wie der Widerstandsdraht, der dann in geeigneter Weise über die gesamte Länge und Breite des Schweißbereichs an das Innere des Gehäuses geklebt wird.

Typische Dehnungsmessstreifen sind sogenannte Folien-Dehnungsmessstreifen. Diese umfassen eine Messgitterfolie aus Widerstandsdraht, die auf einem dünnen Kunststoffträger aufgebracht und mit elektrischen Anschlüssen versehen ist. Das Messgitter kann prinzipiell aus Metall oder Halbleitern bestehen. Halbleiter-Dehnungsmessstreifen nutzen z.B. den piezoresistiven Effekt, um bei einer Verformung des Halbleiterkristalls eine Änderung des spezifischen Widerstands zu erhalten.

Es ist bekannt, solche Dehnungsmessstreifen auf die zu messenden Bauteile, die sich unter Belastung verformen, aufzukleben. Dieses Aufkleben der Dehnungsmessstreifen ist üblicherweise sehr aufwendig. Deshalb ist dafür gesondert geschultes Personal notwendig, welches beim Applizieren der Dehnungsmessstreifen besonders darauf zu achten hat, dass der Messstreifen zwar dauerhaft fest angebracht wird, damit er der mechanischen Verformung des Messobjekts standhält, aber ohne jegliche Vorspannung, damit die Messergebnisse nicht durch eventuelle Verspannungen im Dehnungsmessstreifen selbst verfälscht werden. Der herkömmliche Prozess der Befestigung des Dehnungsmessstreifens am Messobjekt ist daher als aufwändig und nachteilig anzusehen.

Es ist daher die Aufgabe der Erfindung, ein System bereitzustellen, das sowohl eine mechanische Verformung eines Messobjekts zuverlässig detektiert und auch zugleich auf einfache Weise am Messobjekt anzubringen ist.

Zur Lösung dieser Aufgabe ist erfindungsgemäß ein System gemäß Anspruch 1 vorgesehen. Das System umfasst eine Dehnungsmessvorrichtung mit einem Gehäuse, welches einen allseitig abgeschlossenen mit einer Flüssigkeit und/oder einem duktilen Feststoff gefüllten Innenraum begrenzt. Die Dehnungsmessvorrichtung umfasst zumindest ein Dehnungsmesselement zur Erfassung einer Verformung des Gehäuses, welches in dem Innenraum angeordnet ist und zumindest abschnittsweise an einer Innenwand des Gehäuses anliegt.

Beim Einsatz der Dehnungsmessvorrichtung kann die Dehnungsmessvorrichtung an ein Messobjekt angepresst werden, wodurch die Dehnungsmessvorrichtung mit ihrem Gehäuse, insbesondere flächig, an dem Messobjekt anliegt. Das Gehäuse wird bevorzugt zumindest so stark an das Messobjekt angepresst, dass es zu einer Haftreibung zwischen dem Messobjekt und dem Gehäuse kommt. Aufgrund der Haftreibung werden Verformungen bzw. Dehnungen des Messobjekts auf das Gehäuse der Dehnungsmessvorrichtung übertragen. Die hierdurch auftretende Verformung bzw. Dehnung des Gehäuses der Dehnungsmessvorrichtung kann dann wiederum mittels des Dehnungsmesselements im Innenraum der Dehnungsmessvorrichtung erfasst werden, da das Dehnungsmesselement an der Innenwand des Innenraums anliegt und Verformungen des Gehäuses erfasst. Die Verformung des Dehnungsmesselements kann schließlich beispielsweise als analoges oder digitales elektrisches Signal ausgegeben werden.

Durch die Dehnungsmessvorrichtung wird es somit ermöglicht, eine Dehnungsmessvorrichtung auf einfache Weise an einem Messobjekt anzubringen, wobei insbesondere der Klebeprozess entfallen kann. Das Dehnungsmesselement muss also nicht mehr einzeln aufwendig auf das Messobjekt aufgeklebt werden. Stattdessen kann das Gehäuse der gesamten Dehnungsmessvorrichtung z.B. durch einfache Haltemechanismen, welche später im Detail erläutert werden, an das Messobjekt angepresst werden.

Die Anbringung der Dehnungsmessvorrichtung benötigt folglich kein speziell geschultes Personal und ist außerdem wenig fehleranfällig. Die mit der Verwendung einer solchen Dehnungsmessvorrichtung verbundenen Kosten können somit deutlich reduziert werden.

Überdies ist auch der Austausch der Dehnungsmessvorrichtung auf einfache Weise möglich, da die Dehnungsmessvorrichtung lediglich an das Messobjekt angepresst ist, aber nicht z.B. mit dem Messobjekt verklebt ist. Durch Lösen des Haltemechanismus kann die Dehnungsmessvorrichtung vom Messobjekt entfernt und durch eine neue Dehnungsmessvorrichtung ersetzt werden, die wiederum durch den Haltemechanismus an dem Messobjekt befestigt bzw. an das Messobjekt angepresst wird.

Es ist weiterhin von Vorteil, dass durch die Anordnung des Dehnungsmesselements in dem Innenraum des Gehäuses das Dehnungsmesselement vor äußeren Einflüssen geschützt ist, was sich positiv auf die Zuverlässigkeit und die Lebensdauer des Dehnungsmesselements auswirken kann.

Vorteilhafte Weiterbildungen der Erfindung sind der Beschreibung, den Zeichnungen und den Unteransprüchen zu entnehmen.

Das Dehnungsmesselement kann eine Schutzumhüllung umfassen, welche das Dehnungsmesselement, bevorzugt vollständig, umgeben kann. Eine solche Schutzumhüllung kann insbesondere eine Silikonschicht oder dergleichen umfassen, die das Dehnungsmesselement vor äußeren Einflüssen schützt und sich damit positiv auf die Lebensdauer des Dehnungsmesselements auswirkt.

Gemäß einer ersten vorteilhaften Ausführungsform liegt das Dehnungsmesselement beispielsweise mit mindestens 80% oder 90% seiner Fläche oder vollständig an der Innenwand des Gehäuses an. Das Dehnungsmesselement kann zudem auf seiner gesamten Anlagefläche mit der Innenwand fest verbunden sein. Hierdurch kann eine Verformung bzw. Dehnung des Gehäuses besonders vorteilhaft, insbesondere direkt, auf das Dehnungsmesselement übertragen und folglich gemessen werden. Das Dehnungsmesselement kann sich dann genauso verformen, wie das Gehäuse, wodurch eine sehr exakte Messung möglich wird.

Gemäß einer zweiten vorteilhaften Ausführungsform ist der Innenraum vollständig mit der Flüssigkeit und/oder dem duktilen Feststoff gefüllt, wobei die Flüssigkeit und/oder der duktile Feststoff mit dem Dehnungsmesselement zumindest bereichsweise in Kontakt ist. Die Dehnungsmessvorrichtung kann also einen Innenraum umfassen, der allseitig abgeschlossen und dicht ist. Dies bedeutet, dass die Flüssigkeit und/oder der Feststoff in diesem Innenraum dauerhaft eingeschlossen ist, sodass Druck, der auf die Dehnungsmessvorrichtung wirkt, sich gleichmäßig in dem Innenraum verteilt. Durch eine gleichmäßige Druckverteilung können eventuelle Messfehler bzw. Messartefakte vermieden werden. Zudem kann die Dehnungsmessvorrichtung gleichmäßig und flächig an dem Messobjekt anliegen.

Die Flüssigkeit ist vorzugsweise eine viskose Flüssigkeit, insbesondere ein Öl. Öle sind inerte Flüssigkeiten. Das bedeutet, dass diese mit potentiellen Reaktionspartnern nicht oder nur in verschwindend geringem Maße reagieren. Somit kann durch das Öl das Dehnungsmesselement gut vor äußeren Einflüssen geschützt werden. Außerdem besitzen Öle auch eine bessere Wärmeleitfähigkeit als beispielsweise Luft. Auch diese Eigenschaft kann zu einer verbesserten Langlebigkeit der Dehnungsmessvorrichtung beitragen und auch Temperaturunterschiede innerhalb der Dehnungsmessvorrichtung ausgleichen.

Zusätzlich ist es auch möglich, den Innenraum anstelle mit der Flüssigkeit auch generell mit einem Fluid (also z.B. auch mit Gasen/Luft) zu füllen. Es sind auch Mischungen aus Gasen, Flüssigkeiten und/oder duktilen Feststoffen möglich. Bei Verwendung von Gasen können insbesondere Edelgase verwendet werden, die reaktionsarm sind und auf diese Weise eine Alterung des Dehnungsmesselements verlangsamen. Überdies kann das im Innenraum vorhandene Gas, die vorhandene Flüssigkeit und/oder der vorhandene duktile Feststoff unter Druck stehen, auch wenn die Dehnungsmessvorrichtung gerade nicht an das Messobjekt angepresst wird. Der Initial-Druck in dem Innenraum kann beispielsweise größer als 1 Bar, bevorzugt größer als 5 Bar und besonders bevorzugt größer als 10 Bar sein. Durch den Initial-Druck kann die Druckverteilung im Innenraum des Gehäuses weiter verbessert werden.

Im Gegensatz zu einem Gas ist die im Innenraum verwendete Flüssigkeit nicht komprimierbar.

Vorzugsweise ist der duktile Feststoff ein Kunststoff, ein Metall und/oder ein Silikon. Die Füllung des Innenraums kann je nach benötigtem Druck auf die Dehnungsmessvorrichtung unterschiedliche Materialien aufweisen. Wichtig ist lediglich, dass der Feststoff unter dem benötigten Druck verformbar ist, um den Anpressdruck gleichmäßig auf das Gehäuse zu verteilen.

Für die Füllung des Innenraums kann auch beispielsweise Wasser, flüssiges Wachs, flüssige Metalle und dergleichen verwendet werden. Ebenfalls kann z.B. ein Pulver, insbesondere aus Graphit, als Füllung Verwendung finden.

In einer Ausführungsform umfasst das Gehäuse zwei zumindest abschnittsweise zueinander symmetrische Halbschalen. Insbesondere sind die Halbschalen zumindest im Wesentlichen identisch. Durch die Verwendung zueinander symmetrischer bzw. identischer Halbschalen kann das Dehnungsmesselement bei der Produktion an der Innenwand der einen Halbschale befestigt werden, z.B. mittels einer stoffschlüssigen Verbindung, insbesondere mittels Kleben. Anschließend können die beiden Halbschalen miteinander verbunden werden, um den abgeschlossenen Innenraum zu bilden, der vor oder nach dem Verbinden der Halbschalen mit der Flüssigkeit und/oder dem duktilen Feststoff gefüllt wird.

Die Verwendung der beiden Halbschalen kann zum einen die mechanische Stabilität erhöhen. Zum anderen kann bei im Wesentlichen identischen Halbschalen eine hohe Passgenauigkeit realisiert werden. Die Halbschalen können des Weiteren in großer Stückzahl und damit kostengünstig produziert werden.

Zumindest eine Halbschale kann an einer Außenseite einen ebenen (d.h. planen) Anlageabschnitt aufweisen, welcher dazu dient flächig an das Messobjekt angepresst zu werden. An einer Innenwand der Halbschale kann im Bereich des Anlageabschnitts ein bevorzugt ebener Messabschnitt angeordnet sein, an welchem das Dehnungsmesselement angeordnet ist. Außerhalb des Anlageabschnitts kann zumindest eine Halbschale einen um den Anlageabschnitt umlaufenden Verbindungsabschnitt aufweisen, welcher einen um den Anlageabschnitt hochgezogenen Rand bildet. Die zwei Halbschalen können insbesondere im Bereich des Verbindungsabschnitts miteinander verbunden sein. Bevorzugt umfasst der Rand eine Verbindungsfläche, die eben ausgebildet ist und sich parallel zur Erstreckung des Anlageabschnitts erstreckt. Die Verbindungsfläche gestattet auf einfache Weise die Erstellung einer dichten Verbindung zwischen den Halbschalen.

Vorzugsweise sind die Halbschalen miteinander verschweißt und/oder verklebt, wobei das Gehäuse bevorzugt aus einem Metall, insbesondere Aluminium, und/oder einem Kunststoff, insbesondere einem Polyimid, gefertigt ist. Das Gehäuse kann auch Karbon oder einen Faserverbundwerkstoff umfassen, wie z.B. Kohle- oder Glasfaser. Das Verschweißen und/oder Verkleben kann bevorzugt im Bereich der Verbindungsfläche der Halbschalen erfolgen. Durch das Verschweißen und/oder Verkleben der Halbschalen (je nach Material) wird ein dauerhaft dichter Innenraum geschaffen. Dieser verhindert ein Auslaufen der Flüssigkeit aus dem Innenraum und sorgt dadurch für eine lange Lebensdauer der Dehnungsmessvorrichtung. Für Anwendungen, die eine höhere Stabilität und eine bessere Wärmeleitfähigkeit erfordern, können metallische Gehäuse eingesetzt werden. Ist eine kostengünstige Produktion gewünscht, kann ein Kunststoffgehäuse eingesetzt werden.

Das Gehäuse und damit die Dehnungsmessvorrichtung können eine maximale Ausdehnung und/oder einen Durchmesser von etwa 1 bis 3 Zentimetern aufweisen. Insbesondere ist das Gehäuse und/oder der Innenraum zumindest im Wesentlichen rotationssymmetrisch ausgebildet. Als Rotationsachse kann dabei eine senkrechte auf den ebenen Anlageabschnitt dienen.

Wie oben bereits angedeutet, ist eine Außenwand des Gehäuses, die derjenigen Innenwand zugeordnet ist, an welcher das Dehnungsmesselement anliegt, zumindest abschnittsweise eben, wobei sich das Dehnungsmesselement bevorzugt entsprechend einer Verformung der Außenwand und/oder der Innenwand verformt. Das bedeutet, dass jener Bereich der Außenwand (d.h. der Anlageabschnitt), der genau dem Bereich der Innenwand zugeordnet ist, an der der Dehnungsmessstreifen bzw. das Dehnungsmesselement aufgebracht wurde (d.h. der Messabschnitt), zumindest abschnittsweise plan ist, da genau dieser Bereich auf die Oberfläche des Messobjekts angepresst werden muss. Die Verformung des Messobjekts wird somit auf die Dehnungsmessvorrichtung übertragen, wodurch sich das Dehnungsmesselement entsprechend der Verformung der Außenwand bzw. der Innenwand ebenso verformt. Diese Dehnung/Verformung wird letztendlich registriert und als Messergebnis ausgegeben.

Weist die Oberfläche des Messobjekts jedoch einen Krümmungsradius auf, ist es auch möglich, dass jener eben beschriebene Bereich der Außenseite (d.h. der Anlageabschnitt) diesem vorgegebenen Krümmungsradius entspricht, damit die Dehnungsmessvorrichtung beim Anpressen flächig an dem Messobjekt anliegen kann.

Gemäß einer weiteren Ausführungsform ist an einer dem Dehnungsmesselement entgegengesetzten Außenwand des Gehäuses eine Druckplatte vorgesehen, welche zum Anpressen des Gehäuses an ein Messobjekt ausgebildet ist. Diese Druckplatte kann beispielsweise eine Vertiefung für ein Befestigungselement, insbesondere eine Schraube, aufweisen. Durch das Festdrehen der Schraube kann die Druckplatte auf das Gehäuse und damit das Gehäuse an das Messobjekt drücken. Das Anpressen des Gehäuses mithilfe einer Druckplatte hat den Vorteil, dass der Druck genau an vorbestimmter Stelle eingeleitet werden kann. Gleichzeitig kann die Druckplatte aber auch eine Bohrung umfassen, die beispielsweise als Kabelführung für die elektrischen Anschlüsse des Dehnungsmesselements dient. Es versteht sich, dass Anstelle einer Schraube jeweils auch andere geeignete Befestigungsmittel oder Mittel zur Krafteinbringung verwendet werden können.

Die Dehnungsmessvorrichtung kann ein oder mehrere Anschlusskabel umfassen. Die Anschlusskabel können über eine abgedichtete Aussparung in einer Wand des Gehäuses aus der Dehnungsmessvorrichtung herausgeführt sein. Die Dehnungsmessvorrichtung kann mittels der Anschlusskabel mit elektrischer Energie versorgt werden. Alternativ kann die Dehnungsmessvorrichtung auch eine eigene Energiequelle, insbesondere eine Batterie und/oder einen Akku aufweisen.

Gemäß einer Ausführungsform ist/sind das Dehnungsmesselement, bzw. die metallischen Bestandteile desselben, direkt auf den Messabschnitt im Innenraum des Gehäuses aufgedampft oder mittels eines Ätzverfahrens aufgetragen. Insbesondere kann ein Dehnungsmessstreifen des Dehnungsmesselements auf diese Weise direkt auf den Messabschnitt aufgebracht werden.

Ebenso ist es möglich, auch andere elektrische Leiter, d.h. Teile der Anschlusskabel, direkt auf das Gehäuse der Dehnungsmessvorrichtung mittels Aufdampfen oder mittels eines Ätzverfahrens aufzubringen.

Mittels der Anschlusskabel bzw. der elektrischen Leiter können die von der Dehnungsmessvorrichtung erfassten Messsignale nach außen geleitet werden. Die Messsignale können dabei als analoges oder auch als digitales Signal übertragen werden. Zur Bereitstellung der Messsignale kann die Dehnungsmessvorrichtung, bevorzugt innerhalb des Gehäuses, eine Auswerteelektronik aufweisen. Die Auswerteelektronik kann insbesondere auch in dem Innenraum angeordnet sein. In diesem Fall ist es von Vorteil, wenn die Flüssigkeit oder der im Innenraum angeordnete duktile Feststoff nichtleitend sind.

Die Auswerteelektronik kann eine elektrische Wheatstone-Brücke, eine Vollbrücke, eine Halbbrücke und/oder eine Viertelbrücke umfassen, mit welcher eine Auswertung des Dehnungsmesselements erfolgt. Das Dehnungsmesselement kann Bestandteil einer der vorstehend genannten Brückenschaltungen sein.

Das Dehnungsmesselement umfasst bevorzugt zumindest einen Dehnungsmessstreifen, beispielsweise aus einem Metall, insbesondere einen Folien-, Draht-, und/oder Halbleiter-Dehnungsmessstreifen. Das Dehnungsmesselement kann auch Mehrfach-Dehnungsmessstreifen, Dehnungsmessstreifen mit Querdehnung, Vollbrücken-Dehnungsmessstreifen oder Rosetten-Dehnungsmessstreifen umfassen.

Das Dehnungsmesselement insgesamt oder auch nur der Dehnungsmessstreifen kann in der Draufsicht beispielsweise eine mäanderförmige, runde, ovale, quadratische oder rechteckige Form aufweisen. Das Dehnungsmesselement kann auch mehrere separate Dehnungsmessstreifen umfassen.

Das Dehnungsmesselement kann einen piezoelektrischen Sensor umfassen, insbesondere einen piezoelektrischen Kraftsensor. Der piezoelektrische Sensor kann eine Kraft beim Verformen des Gehäuses erfassen, wobei von der Dehnungsmessvorrichtung aus der Kraft eine Dehnung des Messobjekts ermittelt werden kann.

Der piezoelektrische Sensor umfasst bevorzugt zwei Kristallscheiben, zwischen welchen eine Elektrodenfolie angeordnet ist. Unter Einwirkung einer Kraft kann eine Ladung entstehen, die mittels eines Ladungsverstärkers nachgewiesen werden kann. Die Ladung ist insbesondere proportional zur anliegenden Kraft. Die Dehnungsmessvorrichtung kann, z.B. in dem Gehäuse, einen solchen Ladungsverstärker aufweisen.

Alternativ oder zusätzlich zu der Ausgabe der Messsignale mittels des Anschlusskabels können die Messsignale auch kabellos von der Dehnungsmessvorrichtung übertragen werden, beispielsweise mittels Funk- und/oder Infrarotsignalen. Bevorzugt können gängige Funkstandards, wie WiFi (WLAN), Bluetooth, Bluetooth Low Energy (BLE) und/oder Zigbee verwendet werden. Ein entsprechender Funktransponder kann an oder in dem Gehäuse der Dehnungsmessvorrichtung angeordnet sein.

Ist ein Funktransponder in der Dehnungsmessvorrichtung vorgesehen, so können mehrere Dehnungsmessvorrichtungen auch ein sogenanntes Mesh-Funknetz ausbilden, bei welchem die einzelnen Dehnungsmessvorrichtungen jeweils mit in Reichweite befindlichen weiteren Dehnungsmessvorrichtungen kommunizieren. Auf diese Weise muss kein direkter Funkkontakt zu allen Dehnungsmessvorrichtungen, die beispielsweise an einem großen Kran verteilt sind, vorhanden sein. Stattdessen genügt gegebenenfalls schon der Funkkontakt zu einer einzigen Dehnungsmessvorrichtung, um über diese eine Dehnungsmessvorrichtung die Messsignale aller Dehnungsmessvorrichtungen zu empfangen.

Gemäß einer bevorzugten Ausführungsform ist zumindest ein zusätzlicher Sensor vorgesehen, welcher insbesondere ein Temperatursensor und/oder ein Drucksensor ist. Dieser zusätzliche Sensor kann ebenfalls im Innenraum des Gehäuses angeordnet und damit zumindest bereichsweise in Kontakt mit der Flüssigkeit und/oder mit dem duktilen Feststoff sein. Somit kann der zusätzliche Sensor einen Messwert über die Bedingungen, die im Innenraum des Gehäuses herrschen, liefern. Beispielsweise kann er eine Auskunft bzw. eine Warnung über eine Überlastung durch zu hohen Druck oder auch über eine Überhitzung geben.

Alternativ kann der zusätzliche Sensor auch an einer Außenseite des Gehäuses angebracht sein, um so Informationen über die Umgebung der Dehnungsmessvorrichtung zu liefern. Die von dem zusätzlichen Sensor erfassten Daten können gemeinsam mit den Messdaten des Dehnungsmesselements ausgegeben werden.

Der zusätzliche Sensor kann einen Temperatursensor (z.B. Thermoelement, Hitzdraht, Heißleiter - NTC, Kaltleiter - PTC, Halbleiter-Temperatursensor, Faseroptischer Temperatursensor, Bragg-Gitter-Sensor - FBGS), einen Beschleunigungssensor, einen Hallsensor, einen Drucksensor, ein Inclinometer, einen (induktiven) Kraftsensor, einen (induktiven) Wegaufnehmer und/oder einen Reed-Kontakt aufweisen. Andere Arten von Sensoren sind ebenfalls denkbar.

Vorzugsweise ist der zusätzliche Sensor ein Drucksensor, wobei die Dehnungsmessvorrichtung ausgebildet ist, ein Signal auszugeben, wenn der Druck im Innenraum zumindest einen vorbestimmten Schwellenwert übersteigt. Dieser Schwellenwert kann einerseits jener Wert sein, bei dem der Druck auf das Gehäuse zu groß wird und die Gefahr besteht, dass sich das Gehäuse aufgrund eines zu hohen Anpressdrucks verformt und/oder beschädigt wird. Hierdurch wird die Zuverlässigkeit der Dehnungsmessvorrichtung gesteigert.

Andererseits kann der Schwellenwert auch jener Wert sein, bei dem der Anpressdruck erst groß genug ist, um überhaupt eine verlässliche Messung der Dehnung des Messobjekts zu gestatten. Dies bedeutet, der Schwellenwert gibt denjenigen Druck an, der benötigt wird, um eine Haftreibung zwischen der Dehnungsmessvorrichtung und dem Messobjekt zu erzeugen. Hierdurch kann die Montage der Dehnungsmessvorrichtung weiter vereinfacht werden. Es muss dann bei der Montage lediglich so lange der Druck auf die Dehnungsmessvorrichtung erhöht werden, bis die Dehnungsmessvorrichtung mitteilt, dass ein genügend hoher Anpressdruck an das Messobjekt erreicht wurde. In der Folge können Montagefehler vermieden werden.

Der Anpressdruck beim Anpressen an das Messobjekt kann im Innenraum der Dehnungsmessvorrichtung erfasst werden, da beim Anpressen der Dehnungsmessvorrichtung an das Messobjekt der Druck im Innenraum aufgrund einer immer vorhandenen Elastizität des Gehäuses steigt. Durch die Messung dieses Drucks kann folglich kontrolliert werden, wie stark die Dehnungsmessvorrichtung an das Messobjekt gepresst werden muss.

Möglich ist es auch, dass die Dehnungsmessvorrichtung bei beiden und/oder mehreren Schwellenwerten ein Signal ausgibt. Ebenfalls ist es möglich, dass die Dehnungsmessvorrichtung überhaupt erst Messwerte ausgibt, wenn ein genügend hoher Anpressdruck an das Messobjekt vorhanden ist.

Wie oben ausgeführt, ist Gegenstand der Erfindung ein System zum Messen einer Dehnung eines Messobjekts mit zumindest einer Dehnungsmessvorrichtung, wobei das System eine Halterung aufweist, welche die Dehnungsmessvorrichtung an das Messobjekt anpresst, wobei ein Anpressdruck (bzw. eine Anpresskraft) derart groß ist, dass eine Dehnung des Messobjekts aufgrund von Haftreibung zwischen der Dehnungsmessvorrichtung und dem Messobjekt auf die Dehnungsmessvorrichtung übertragen wird. Die Dehnung des Messobjekts wird dann mittels der Dehnungsmessvorrichtung erfasst.

Die Dehnungsmessvorrichtung wird mittels der Halterung zumindest so stark an das Messobjekt angepresst, dass eine Übertragung der Dehnung des Messobjekts durch Haftreibung auf die Dehnungsmessvorrichtung stattfindet. Dadurch ist es nicht mehr notwendig das Dehnungsmesselement aufwendig an das Messobjekt zu kleben oder an das Messobjekt zu schweißen oder einen sonstigen Stoffschluss zu realisieren. Die gesamte Dehnungsmessvorrichtung kann durch die vergleichsweise einfache Halterung an das Messobjekt angepresst werden und kann folglich auch auf einfache Weise ausgetauscht werden. Das Anpressen kann dabei die einzige Art der Befestigung der Dehnungsmessvorrichtung an dem Messobjekt sein, d.h. es erfolgt kein Kleben oder Schweißen und auch kein sonstiger Stoffschluss.

Um die Schaffung der Haftreibung zu erleichtern kann das Gehäuse der Dehnungsmessvorrichtung auf der Außenseite und insbesondere im Bereich des Anlageabschnitts aufgeraut sein und/oder eine Beschichtung aufweisen, insbesondere mit Gummi oder einem anderen wenig gleitenden Material.

Eine vorteilhafte Ausführungsform sieht es vor, dass die Halterung ein elastisches Element umfasst, welches den Anpressdruck zumindest zum Teil erzeugt, wobei der Anpressdruck bevorzugt einstellbar ist. Ein derartiges elastisches Element kann dazu dienen, das Dehnungsmesselement mit einem exakt definierten aber ggf. einstellbaren Anpressdruck an das Messobjekt anzupressen. Der Anpressdruck kann hierbei überwiegend oder auch vollständig von dem elastischen Element erzeugt werden. Durch eine Einstellbarkeit kann außerdem nicht nur der Anpressdruck genauer definiert werden, es ist auch somit möglich die Dehnungsmessvorrichtung in unterschiedlichen Anwendungsgebieten einzusetzen. Je nach Anwendung kann somit der Anpressdruck entsprechend eingestellt werden.

Ein weiterer Vorteil des elastischen Elements ist auch die Kompensation von Schwingungen und/oder Erschütterungen. In einigen Anwendungsgebieten kann das Messobjekt nämlich Schwingungen oder Erschütterungen ausgesetzt sein, welche die Messergebenisse von Dehnungsmessstreifen verfälschen können. Ein elastisches Element kann derartige störende Schwingungen und/oder Erschütterungen auffangen, wodurch Messartefakte vermieden und die Messergebnisse dadurch verbessert werden können. Außerdem wird die Dehnungsmessvorrichtung durch das elastische Element vor Beschädigungen geschützt.

Gemäß einer Ausführungsform umfasst das elastische Element eine, insbesondere metallische, Feder oder ein Polymerkissen. Federn haben den Vorteil, dass sie vergleichsweise einfach und exakt gespannt und wieder entspannt werden können, wodurch die Dehnungsmessvorrichtung mit einem definierten Anpressdruck an das Messobjekt gepresst werden kann. Auch Stöße, Erschütterungen und Schwingungen können durch Federn gut abgefangen werden, wodurch die Dehnungsmessvorrichtung geschützt wird.

Polymerkissen haben u. a. auch den Vorteil, dass sich deren Form an die Oberfläche, an die sie gepresst werden, anpassen kann. Ist also eine möglichst flexible Form notwendig, die sich gut an die Verformung des Messobjekts anpassen kann, kann ein Polymerkissen eine vorteilhafte Lösung sein.

Allgemein gesprochen, kann die Halterung ein Spannmittel umfassen, welches einen Druck und/oder eine Kraft auf die Dehnungsmessvorrichtung erzeugt. Bevorzugt können die von dem Spannmittel erzeugte Kraft und/oder der von dem Spannmittel erzeugte Druck einstellbar sein, beispielsweise mittels eines Werkzeugs wie einer Drehmomentratsche.

Die Befestigungsschraube kann das Spannmittel bilden und beispielsweise in einem Gewinde im Spannband geführt sein und auf die Druckplatte oder auch direkt auf das Gehäuse drücken, um den notwendigen Anpressdruck zu erzeugen. Die Stärke des Anpressdrucks ist durch die Stärke des Anzugsdrehmoments der Spannschraube einstellbar. Durch das Anpressen mithilfe eines Spannbands kann die Dehnungsmessvorrichtung mit geringem Aufwand an Messobjekten unterschiedlicher Geometrie aufgebracht werden. Außerdem ist es auch denkbar mehrere Dehnungsmessvorrichtungen mit demselben Spannband anzupressen. Das Spannband kann rein beispielhaft ein Metallspannband sein. Insbesondere ist das Spannband um das Messobjekt umlaufend ausgebildet.

Die Befestigung der Dehnungsmessvorrichtung mittels eines Spannbandes erlaubt die Anbringung der Dehnungsmessvorrichtung in einer Vielzahl von Anwendungsbereichen. Beispielsweise kann die Dehnungsmessvorrichtung an einer Schiffswelle angebracht sein, wobei die Dehnungsmessvorrichtung die Torsion der Schiffswelle erfasst. Aus der Torsion der Schiffswelle kann dann auf eine aktuelle Antriebsleistung rückgeschlossen werden, die die Schiffswelle überträgt.

Ebenso kann die Dehnungsmessvorrichtung an einem Kranausleger angebracht sein, um Messdaten über den Belastungszustand des Kranauslegers zu liefern.

Gemäß einer weiteren Ausführungsform weist die Halterung zumindest eine Klemmvorrichtung auf, insbesondere eine Zwinge, die dazu ausgebildet ist, mit einem Befestigungsmittel, insbesondere einer Befestigungsschraube, zusammenzuwirken und die Dehnungsmessvorrichtung an das Messobjekt anzupressen. Die Klemmvorrichtung kann das Messobjekt von zumindest zwei gegenüberliegenden Seiten einklemmen, wobei die Klemmvorrichtung zugleich auch die Dehnungsmessvorrichtung an das Messobjekt anpresst. Mittels der Befestigungsschraube kann die Stärke der Klemmung und damit wiederum der Anpressdruck eingestellt werden.

Eine Ausführungsform sieht es auch vor, dass das Befestigungsmittel einen Abstützstempel aufweist, an dem zumindest eine Dehnungsmessvorrichtung drehfest fixiert ist, wobei das Befestigungsmittel einen Drehmechanismus zum Einstellen des Anpressdrucks, mit welchem das Befestigungsmittel die Dehnungsmessvorrichtung an das Messobjekt andrückt, aufweist, wobei z.B. eine Komponente des Drehmechanismus zumindest abschnittsweise relativ zum Abstützstempel drehbar ist. Durch den Drehmechanismus kann also der Anpressdruck, mit welchem der Abstützstempel und in der Folge auch die Dehnungsmessvorrichtung an das Messobjekt angepresst wird, einfach eingestellt werden. Hierbei wird der Drehmechanismus - beispielsweise um ein Gewinde - gedreht, um den Druck zu erhöhen oder zu erniedrigen. Der Abstützstempel selbst hingegen dreht sich bevorzugt nicht mit, sondern bewegt sich lediglich in einer Translationsbewegung in Richtung des Messobjekts oder von dem Messobjekt weg.

Gemäß einer weiteren Ausführungsform umfasst der Drehmechanismus eine Schraube und eine an der Schraube drehbar gelagerte Mutter, wobei mittels der Schraube und der Mutter der Anpressdruck einstellbar ist. Die Schraube kann dabei den Abstützstempel bilden. Die Mutter kann dementsprechend die oben genannte Komponente des Drehmechanismus sein, welche um den Abstützstempel gedreht wird. Die Schraube - und folglich auch die daran befestigte Dehnungsmessvorrichtung - drehen sich nicht mit, sondern behalten eine definierte Ausrichtung relativ zum Messobjekt bei.

Eine Mutter-/Schraubenkombination hat außerdem den Vorteil, dass die Mutter auf einem Begrenzungselement aufliegen kann, wodurch die Mutter zusammen mit dem Begrenzungselement als einseitige Positionsbegrenzung dient, sodass die Dehnungsmessvorrichtung nur bis zu einem gewissen maximalen Anpressdruck an das Messobjekt angepresst werden kann. Die korrekte Anbringung der Dehnungsmessvorrichtung an das Messobjekt wird somit erheblich vereinfacht.

Gemäß einer weiteren Ausführungsform kann auch eine mit Druckstangen gekoppelte Spindel als Halterung verwendet werden, um die Dehnungsmessvorrichtung in einem Hohlprofil an eine Innenwand des Hohlprofils anzupressen. Hierbei können z.B. vier Druckstangen verwendet werden, welche jeweils an der Spindel befestigt sind. Jeweils zwei Druckstangen sind derart verbunden, dass die beiden Druckstangen eine Kraft an etwa derselben Stelle der Innenwand des Hohlprofils einbringen. Die Stellen, an welchen die Druckstangen auf die Innenwand des Hohlprofils drücken, liegen bevorzugt einander bezüglich der Spindel gegenüber. Die vier Druckstangen können bevorzugt eine Raute bilden. An einer oder an beiden Stellen kann eine Dehnungsmessvorrichtung zwischen den Druckstangen und der Innenwand platziert werden, die beim Anziehen der Spindel mittels der Druckstangen an die Innenwand gepresst werden. Hierzu kann die Spindel ein Links- und ein Rechtsgewinde aufweisen.

Gemäß einer weiteren Ausführungsform weist die Halterung ein drehfest an das Messobjekt angebrachtes Aufnahmeelement auf, das dazu ausgebildet ist, ein Halteelement, insbesondere eine Schraube, an dem die Dehnungsmessvorrichtung angebracht ist, aufzunehmen. Das Halteelement drückt die Dehnungsmessvorrichtung an das Messobjekt an. Das Aufnahmeelement kann insbesondere dauerhaft und/oder unlösbar an dem Messobjekt befestigt sein, beispielsweise durch Kleben, Löten oder Schweißen. Zum Befestigen der Dehnungsmessvorrichtung muss dann lediglich das Halteelement mit der an dem Halteelement befestigten Dehnungsmessvorrichtung in das Aufnahmeelement gebracht werden. Diese Ausführungsform stellt eine besonders einfache Methode dar, um die Dehnungsmessvorrichtung an einem Messobjekt zu befestigen und gegebenenfalls auszutauschen, da lediglich das Aufnahmeelement fest am Messobjekt befestigt werden muss. Das Halteelement kann vom Benutzer einfach in das Aufnahmeelement gedreht/geschraubt, gesteckt oder gedrückt werden.

Eine vorteilhafte Ausführungsform ist, das Aufnahmeelement als eine Fassung, insbesondere als eine Mutter, mit einem Innengewinde auszubilden, wobei das Halteelement ein Außengewinde aufweist, das mit dem Innengewinde der Fassung zusammenwirkt, um die Dehnungsmessvorrichtung an das Messobjekt anzupressen. Hierdurch lässt sich das Halteelement einfach in das Aufnahmeelement drehen bzw. schrauben. Das Halteelement kann dabei wiederum ein elastisches Element umfassen, wie oben beschrieben, wobei das elastische Element den Anpressdruck zumindest zum Teil erzeugt. Insbesondere kann das elastische Element um das Halteelement herum oder an einem dem Messobjekt zugewandten Ende des Halteelements angeordnet sein.

Gemäß einer weiteren Ausführungsvariante ist ein Sicherungselement vorgesehen, insbesondere ein Sicherungsstift, das das Halteelement in dem Aufnahmeelement in einer definierten Ausrichtung relativ zum Messobjekt sichert. In der Regel sollen Dehnungen bzw. Verformungen des Messobjekts entlang definierter Achsen gemessen werden. Da auch Dehnungsmesselemente für gewöhnlich richtungsabhängig arbeiten, muss die Dehnungsmessvorrichtung in einer definierten Ausrichtung relativ zum Messobjekt angebracht werden. Durch das Einbringen des Halteelements in dem Aufnahmeelement wird dies auf einfache Weise ermöglicht. Damit sich die Ausrichtung der Dehnungsmessvorrichtung relativ zum Messobjekt nicht mehr ändert, ist das Sicherungselement vorgesehen, das dafür sorgt, dass die definierte Position und Ausrichtung der Dehnungsmessvorrichtung über die Zeit beibehalten wird.

Es ist auch denkbar, dass das Aufnahmeelement zumindest zwei einander gegenüberliegende Nuten aufweist, die dazu ausgebildet sind, das Sicherungselement aufzunehmen. Ein Sicherungsstift kann somit beispielsweise einfach durch die beiden Nuten geführt werden, um das Halteelement in einer definierten Position zu halten. Eine weitere Drehung des Halteelements im Aufnahmeelement wird somit verhindert. Das Halteelement kann dementsprechend eine Ausnehmung oder Durchgangsbohrung aufweisen, die derart ausgebildet ist, dass das Sicherungselement bzw. der Sicherungsstift durch die Aufnahme zusätzlich geführt werden kann, um ein Verdrehsichern des Halteelements an dem Aufnahmeelement zu gewährleisten.

Vorzugsweise weist das Aufnahmeelement mehrere Paare von gegenüberliegenden Nuten auf, damit die Dehnungsmessvorrichtung in einer Mehrzahl von möglichen Ausrichtung zum Messobjekt fixiert werden kann.

Gemäß einem Ausführungsbeispiel umfasst die Halterung ein Ummantelungselement (z.B. eine Art Manschette) und zumindest ein Befestigungselement, insbesondere eine Befestigungsschraube, wobei das Ummantelungselement dazu ausgebildet ist, das Messobjekt zumindest abschnittsweise zu umgeben, mit dem Befestigungselement zusammenzuwirken und zumindest eine Dehnungsmessvorrichtung an das Messobjekt anzupressen. Ein solches Ummantelungselement ermöglicht eine richtungsabhängige Messung der Dehnungs-Spannung eines Messobjekts. Dadurch, dass das Ummantelungselement das Messobjekt in Umfangsrichtung vollständig umgibt, kann auch an mehreren Stellen entlang des Umfangs eine Dehnungsmessvorrichtung angebracht und damit eine Ausrichtung bzw. eine vorhandene Biegespannung des Messobjekts (insbesondere vor dem später genannten Wöhlerversuch) gemessen werden.

Es ist auch möglich, dass das Ummantelungselement zumindest zwei Mantelteile umfasst, die durch zumindest ein Verbindungselement, insbesondere ein Scharnier, beweglich miteinander verbindbar sind. Die Anbringung an ein Messobjekt wird hierdurch vereinfacht, da durch das Verbindungselement das Ummantelungselement einfach auf- und zugeklappt werden kann.

Das Ummantelungselement kann zwei oder mehr, bevorzugt z.B. vier oder acht, Dehnungsmessvorrichtungen gleichzeitig an unterschiedlichen Stellen an ein von dem Ummantelungselement umgebenes Messobjekt anpressen. Bevorzugt weisen die verschiedenen Dehnungsmessvorrichtungen dabei unterschiedliche Orientierungen im Raum auf. Insbesondere kann das Messobjekt im Bereich innerhalb des Ummantelungselements eine gekrümmte Oberfläche aufweisen und bevorzugt konkav und/oder konvex ausgebildet sein. Die verschiedenen Dehnungsmessvorrichtungen können dann an unterschiedliche Positionen der gekrümmten Oberfläche angepresst werden, sodass Dehnungsspannungen in verschiedenen Richtungen von den verschiedenen Dehnungsmessvorrichtungen erfasst werden können. Auf diese Weise kann z.B. eine Ausrichtung des Messobjekts erfasst werden.

Die Erfindung betrifft weiterhin ein Verfahren zur Verwendung des hierin beschriebenen Systems gemäß Anspruch 13. Bei dem Verfahren ist unter anderem vorgesehen, dass
- zumindest eine Dehnungsmessvorrichtung mittels einer Halterung an ein Messobjekt angepresst wird,
- das Messobjekt zunächst in einem ersten Bereich in einer Einspannvorrichtung befestigt wird,
- nach dem Befestigen in dem ersten Bereich eine Messung der Dehnung des Messobjekts erfolgt,
- das Messobjekt anschließend auch in einem zweiten Bereich in einer Einspannvorrichtung befestigt wird,
- nach dem Befestigen in dem zweiten Bereich eine weitere Messung der Dehnung des Messobjekts erfolgt.

Als Halterung kann bei dem Verfahren bevorzugt das vorstehend erläuterte Ummantelungselement verwendet werden.

Bei dem erfindungsgemäßen Verfahren ist von Vorteil, dass die Dehnungsmessvorrichtung mittels der Halterung an prinzipiell beliebigen Messobjekten angebracht werden kann, sodass erfindungsgemäß nicht nur speziell mit einer Dehungsmessvorrichtung präparierte Messobjekte zur Dehnungsmessung verwendet werden können, sondern dass auch "reale" Messobjekte Verwendung finden können.

Zudem wird es durch die Durchführung separater Messungen nach der Befestigung im ersten und zweiten Bereich ermöglicht, zu erkennen, ob die Befestigung im ersten und/oder zweiten Bereich zu einer Dehnung (z.B. einer Biegespannung) des Messobjekts geführt hat, welche eventuell das Messergebnis des nachfolgend genannten Wöhlerversuchs verfälschen kann. Alternativ kann die erste Messung dazu dienen ein "Nullen" des Messergebnisses, d.h. eine Kalibrierung, durchzuführen.

Gemäß einer Weiterbildung des Verfahrens werden nach der weiteren Messung die zumindest eine Dehnungsmessvorrichtung und die Halterung von dem Messobjekt entfernt. Alternativ kann die Dehnungsmessvorrichtung auch an dem Messobjekt verbleiben. Anschließend kann ein Wöhlerversuch mit dem Messobjekt durchgeführt werden. Ist die Dehnungsmessvorrichtung noch an dem Messobjekt angebracht, kann eine Dehnungsmessung während des Versuchs erfolgen. Bei dem Wöhlerversuch wird die Schwingfestigkeit und/oder die Dauerfestigkeit des Messobjekts untersucht, wobei z.B. mittels wiederholter Zug-/Druckbelastungen, Biegungen, Torsion und/oder Querkraftschub eine Belastung des Messobjekts erfolgt.

Weitere Ausführungsformen ergeben sich aus der folgenden beispielhaften Beschreibung der Figuren. In dieser zeigt:
Fig. 1: schematisch eine Dehnungsmessvorrichtung in einer Seitenansicht;
Fig. 2: schematisch einen Querschnitt einer Dehnungsmessvorrichtung;
Fig. 3: schematisch eine Dehnungsmessvorrichtung mit einer Zwingen-Halterung;
Fig. 4: schematisch zwei Dehnungsmessvorrichtungen mit einer Zwingen-Halterung;
Fig. 5a und 5b: eine Seitenansicht und einen Schnitt einer Klemmhalterung mit einer integrierten Feder;
Fig. 6a bis 6d: verschiedene Ansichten eines Aufnahmeelements mit einem Halteelement und einem Sicherungsstift;
Fig. 7a bis 7d: verschiedene Ansichten eines Ummantelungselements zum Befestigen von zwei Dehnungsmessvorrichtungen; und
Fig. 8a bis 8c: verschiedene Ansichten eines Ummantelungselements zum Befestigen von acht Dehnungsmessvorrichtungen.

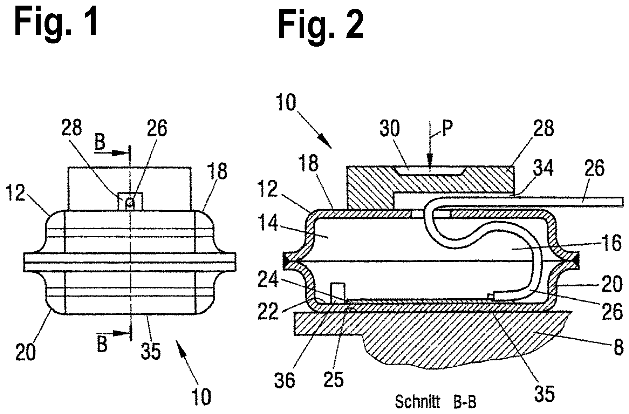

In Figur 1 und Figur 2 ist eine Dehnungsmessvorrichtung 10 in einer Seitenansicht bzw. in einem Querschnitt dargestellt. Die Dehnungsmessvorrichtung 10 umfasst ein Gehäuse 12, das einen allseitig abgeschlossenen Innenraum 14 begrenzt. Dieser Innenraum 14 ist mit einer Flüssigkeit (Medium) 16 gefüllt. Durch den allseitig umschlossenen Innenraum 14 ist das Medium 16 dicht und dauerhaft eingeschlossen. Somit kann das Medium 16 einen Anpressdruck, der auf die Dehnungsmessvorrichtung 10 wirkt, gleichmäßig verteilen.

Das Gehäuse 12 umfasst zwei zueinander symmetrische Halbschalen 18, 20, die miteinander verschweißt und/oder verklebt sind. Die Halbschalen 18, 20 sind aus einem Metall, insbesondere Aluminium, gefertigt.

An einer Innenwand 22, die der unteren Halbschale 20 des Gehäuses 12 zugeordnet ist, ist ein Dehnungsmesselement 24 in Form eines Dehnungsmessstreifens angeordnet. Das Dehnungsmesselement 24 ist in einem Messabschnitt 25 an der Innenwand 22 angebracht. Durch die Anordnung des Dehnungsmesselements 24 in dem Innenraum 14 des Gehäuses 12 ist das Dehnungsmesselement 24 gut vor äußeren Einflüssen geschützt. Des Weiteren ist es (auf der der Innenwand 22 abgewandten Seite) vollständig von dem Medium 16 umgeben, das sich im Innenraum 14 befindet, damit ein gleichmäßiger Druck auf das Dehnungsmesselement 24 wirkt. Ausgehend vom Dehnungsmesselement 24 erstreckt sich eine Verdrahtung bzw. ein Anschlusskabel 26 durch das Gehäuse 12 nach außen, um die erfassten Daten (Messdaten) des Dehnungsmesselements 24 auszugeben.

An einer Außenseite der oberen Halbschale 18 des Gehäuses 12 ist eine Druckplatte 28 angeordnet. Die Druckplatte 28 weist in dieser beispielhaften Ausführungsform eine Vertiefung 30 auf, in die ein nicht dargestelltes Befestigungselement 32, insbesondere eine Befestigungsschraube 32, eingreift. Die Druckplatte 28 dient dazu, einen Anpressdruck P auf die Dehnungsmessvorrichtung 10 auszuüben, um diese an ein Messobjekt 8 anzupressen. Des Weiteren weist die Druckplatte 28 eine Bohrung einer Kabelführung 34 auf, durch die die Anschlusskabel 26 des Dehnungsmesselements 24 aus dem Gehäuse 12 geführt werden.

Eine Außenwand 21 der unteren Halbschale 20 ist in der gezeigten Ausführungsform von Figur 1 und Figur 2 plan und bildet so einen Anlageabschnitt 35, welcher flächig auf eine plane Oberfläche des Messobjekts 8 gepresst wird.

Zusätzlich ist ein weiterer Sensor 36 im Innenraum 14 des Gehäuses 12 angeordnet, der ebenfalls von dem Medium 16 umgeben ist. Der Sensor 36 ist zugleich ein Temperatursensor und ein Drucksensor, welcher Messwerte über die Bedingungen im Innenraum 14 des Gehäuses 12 liefert. Die Daten des zusätzlichen Sensors 36 können beispielsweise über die Anschlusskabel 26 ausgegeben werden.

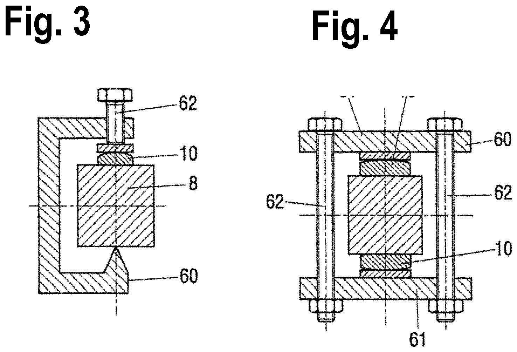

Zur Erzeugung des notwendigen Anpressdrucks P und damit zur Halterung der Dehnungsmessvorrichtung 10 an verschiedenen Messobjekten 8 sind unterschiedliche Haltemechanismen vorgesehen, welche nachstehend mit Bezug auf die Figuren 3 bis 4 beispielhaft erläutert werden.

Eine Ausführungsform zur Halterung der Dehnungsmessvorrichtung 10 ist in den Figuren 3 und 4 dargestellt. Bei dieser Ausführungsform wird die Dehnungsmessvorrichtung 10 von außen mit Hilfe einer Klemmvorrichtung bzw. einer Zwinge 60 an das Messobjekt 8 gepresst. Die Klemmvorrichtung/Zwinge 60 umfasst eine Befestigungsschraube 62 (Figur 3) bzw. zwei Befestigungsschrauben 62 (Figur 4), durch welche der notwendige Anpressdruck P erzeugt wird. Bei der Ausführungsform von Figur 4 umfasst die Zwinge 60 zwei bezüglich des Messobjekts 8 gegenüberliegende Platten 61, von welchen jede eine Dehnungsmessvorrichtung 10 an gegenüberliegenden Seiten des Messobjekts 8 an das Messobjekt 8 anpresst.

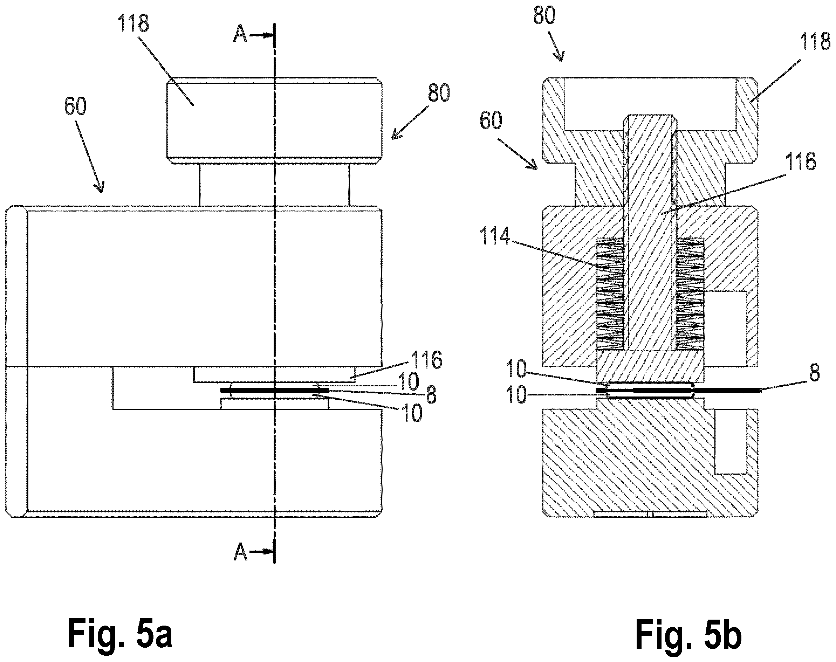

Die Figuren 5a und 5b zeigen ein Ausführungsbeispiel, bei dem zwei Dehnungsmessvorrichtungen 10 verwendet werden, um sie an zwei gegenüberliegende Seiten eines plattenförmigen Messobjekts 8 anzupressen. Hierzu ist eine Dehnungsmessvorrichtung 10 an einem Abstützstempel 116 einer Klemmvorrichtung 60 angebracht, während die zweite Dehnungsmessvorrichtung 10 an der Klemmvorrichtung 60 selbst befestigt ist und der ersten Dehnungsmessvorrichtung 10 gegenüber liegt. Der Abstützstempel 116 ist zum Teil von einer Feder 114 umgeben, welche durch einen Drehmechanismus (d.h. durch eine Mutter) 118 gespannt werden kann.

Der Abstützstempel 116 und der Drehmechanismus 118 bilden hierzu gemeinsam eine Mutter-/Schraubenverbindung, wodurch die Mutter 118 um die Schraube 116 gedreht werden kann und diese damit entlang der Bewegungsachse A bewegt und die Feder 114 dadurch spannt bzw. entspannt. Die Schraube 116 selbst führt währenddessen keine Drehung durch.

Durch das Spannen der Feder 114 wird die Klemmvorrichtung 60 und damit die beiden Dehnungsmessvorrichtungen 10 so weit auseinander gezogen, bis ein Messobjekt 8 dazwischen positioniert werden kann. Die Feder 114 sorgt im Anschluss dafür, dass die Dehnungsmessvorrichtungen 10 mit einem definierten Anpressdruck P an das Messobjekt 8 gepresst werden, sodass diese eine Verformung des Messobjekts 8 ermitteln können.

Eine derartige Halterung für Dehnungsmessvorrichtungen 10 kann vor allem dann zum Einsatz kommen, wenn die Messobjekte 8 entsprechend klein und schmal sind.

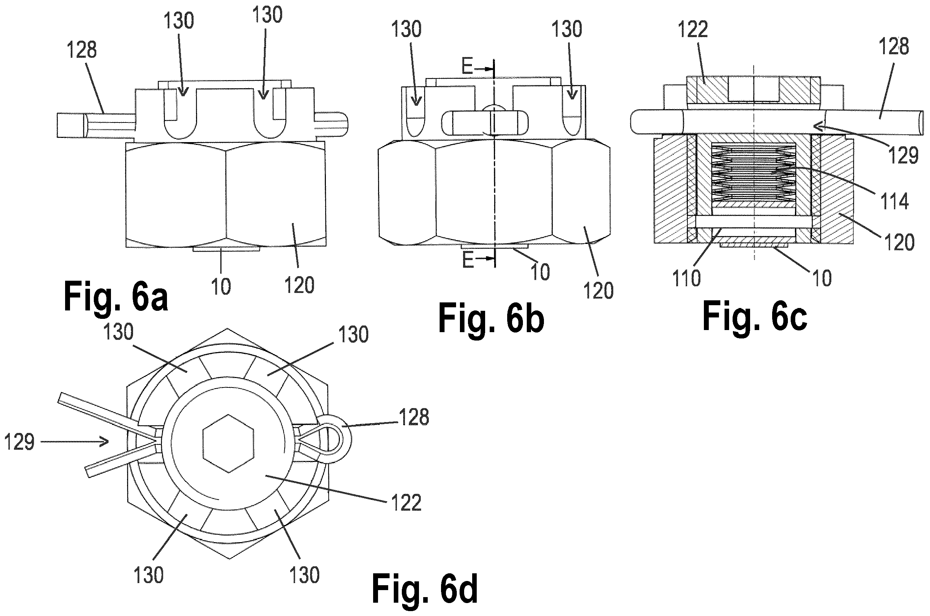

In den Figuren 6a bis 6d ist ein weiteres Ausführungsbeispiel dargestellt. Dieses zeigt eine Mutter als Aufnahmeelement 120, in die eine Schraube als Halteelement 122 gedreht ist. Die Mutter 120 weist hierzu ein (nicht dargestelltes) Innengewinde 124 auf, während die Schraube 122 ein (nicht dargestelltes) Außengewinde 126 umfasst.

Zum Messen einer Ausdehnung bzw. Verformung eines Messobjekts 8 ist eine Dehnungsmessvorrichtung 10 am unteren Ende der Schraube 122 drehfest befestigt. In der Praxis wird die Mutter 120 fest auf das Messobjekt 8 geklebt, gelötet oder geschweißt, damit lediglich die Schraube 122 mit der darauf befestigten Dehnungsmessvorrichtung 10 eingeschraubt werden muss. Hierdurch wird ein besonders einfaches Befestigen bzw. Austauschen von Dehnungsmessvorrichtungen ermöglicht.

Beim Eindrehen der Schraube 122 ist lediglich darauf zu achten, dass die Dehnungsmessvorrichtung 10 in der gewünschten Ausrichtung zum Messobjekt 8 an das Messobjekt gedrückt wird. Der korrekte Anpressdruck P wird wiederum durch eine Feder 114, welche in der Schraube 122 am Abstützstempel 116 angeordnet ist, erzeugt.

Zum Sichern der gewünschten Position der Schraube 122 auf dem Messobjekt 8 ist ein Sicherungsstift 128 vorgesehen, der sowohl durch die Aufnahme 129 der Schraube 122 als auch durch die entsprechenden Nuten 130 der Mutter 120 gesteckt werden kann. Hierdurch wird die Schraube 122 in einer definierten Ausrichtung vom Sicherungsstift 128 festgehalten, wodurch eine weitere Verdrehung nicht mehr möglich ist. Die Dehnungsmessvorrichtung 10 wird dadurch sicher und fest auf das Messobjekt 8 gedrückt.

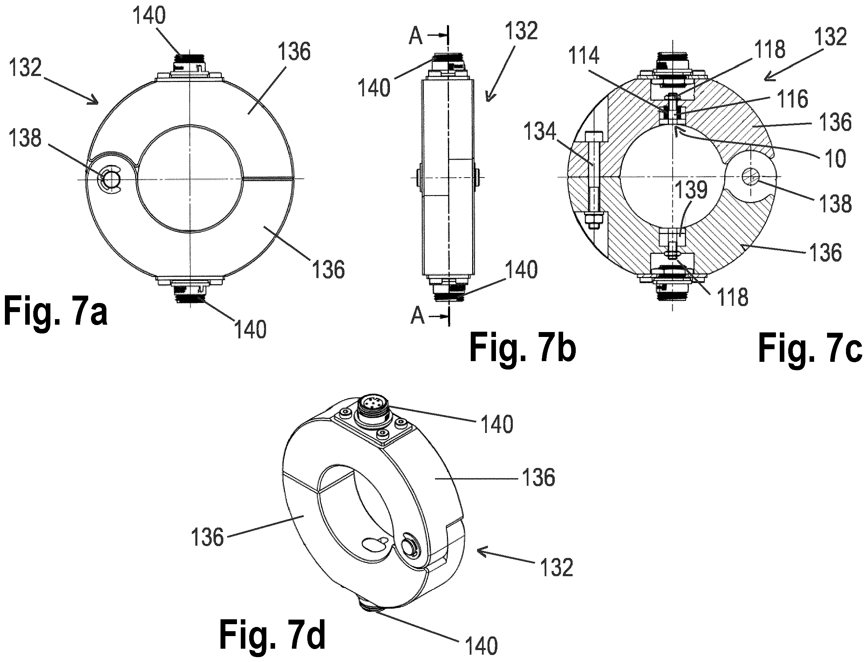

Eine weitere Ausführungsform zeigen die Figuren 7a bis 7c. In diesen sind verschiedene Ansichten eines Ummantelungselements 132 dargestellt, welches aus zwei Mantelteilen 136 besteht, die über ein durch einen Stift gebildetes Verbindungselement 138 miteinander verbunden sind. Die Verbindung durch den Stift 138 dient dazu, dass die beiden Mantelteile 136 auseinandergeklappt werden können, damit sie um ein (nicht dargestellten) Messobjekt 8 einfach befestigt werden können. Das (geschlossene) Ummantelungselement 132 umschließt dann folglich ein Messobjekt 8.

Des Weiteren ist ein Befestigungselement 134 in Form einer Schraube vorgesehen (siehe Fig. 7c), welches die beiden Mantelteile 136 im geschlossenen Zustand des Ummantelungselements 132 fest miteinander verbindet.

An zwei gegenüberliegenden Punkten am Innenumfang des Ummantelungselements 132 ist jeweils ein Abstützstempel 116 angeordnet, an dessen radial innen liegender Seite eine Dehnungsmessvorrichtung 10 angebracht ist. Der notwendige Anpressdruck P auf die Dehnungsmessvorrichtung 10 wird durch eine Feder 114 erzeugt, welche in derselben Aussparung 139 im Mantelteil 136 platziert ist, in der auch der Abstützstempel 116 angeordnet ist. Die Feder 114 umgibt den Abstützstempel 116.

Als Positionsbegrenzung für den Abstützstempel 116 bzw. die Feder 114 ist wiederum eine Mutter 118 vorgesehen. Diese begrenzt die Bewegung des Abstützstempels 116 in Richtung des Messobjekts 8 (also nach radial innen), wobei die Mutter 118 an einer Begrenzungsfläche (d.h. einem Begrenzungselement) des jeweiligen Mantelteils 136 aufliegt. Die Mutter 118 lässt es aber zu, dass der Abstützstempel 116 nach hinten (also nach radial außen) - beispielsweise im Falle einer Erschütterung - ausweichen könnte. So kann die Dehnungsmessvorrichtung 10 geschützt und Messartefakte vermieden werden.

Zusätzlich sind am Außenumfang des Ummantelungselements 132 im Bereich der Dehnungsmessvorrichtung 10 Kabelanschlüsse (elektrische Stecker) 140 vorgesehen, mit Hilfe derer die Messsignale der Dehnungsvorrichtungen 10 jeweils abgegriffen werden können.

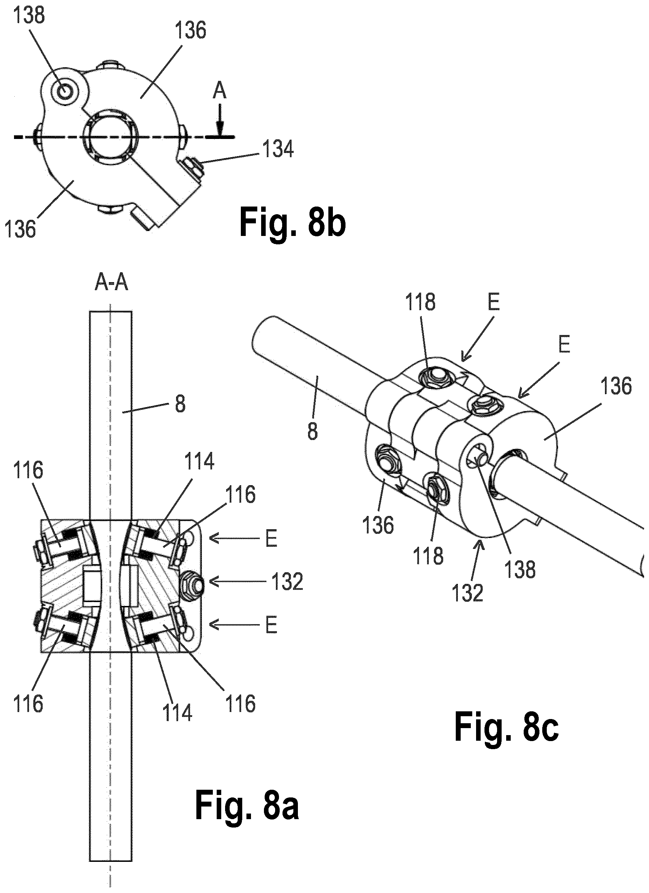

Die Figuren 8a bis 8c zeigen ebenso ein Ausführungsbeispiel einer Halterung mit einem Ummantelungselement 132, welches rund um ein Messobjekt 8 angebracht wird. Der Aufbau unterscheidet sich im Wesentlichen nicht von dem, der hinsichtlich der Figuren 7a bis 7d beschrieben wurde.

Ein Unterschied liegt allerdings darin, dass anstelle von nur zwei Dehnungsmessvorrichtungen 10 in diesem Ausführungsbeispiel acht Dehnungsmessvorrichtungen 10 vorgesehen sind, die in zwei Ebenen E angeordnet sind. Durch eine Anordnung mehrerer Dehnungsmessvorrichtungen 10 rund um ein Messobjekt 8 in mehreren Ebenen E kann eine richtungsabhängige Verformung des Messobjekts 8 bestimmt werden. Bei der Verwendung von nur einer Dehnungsmessvorrichtung 10 ist dies nicht möglich.

Die acht Dehnungsmessvorrichtungen 10 liegen an einer konkaven Oberfläche des runden Messobjekts 8 an. Hierdurch erfassen die acht Dehnungsmessvorrichtungen 10 Dehnungsspannungen in acht unterschiedlichen Raumrichtungen. Durch die Erfassung der richtungsabhängigen Verformung ist es möglich mittels der in den Figs. 8 gezeigten Anordnung eine besonders genau eine vorhandene Biegespannung (d.h. Dehnung) des Messobjekts 8 zu bestimmen. Werden die acht Dehnungsmessvorrichtungen 10 beispielsweise vor dem Einspannen des Messobjekts 8 in eine Maschine zur Durchführung eines Wöhlerversuchs an das Messobjekt 8 angebracht, kann eine ggf. beim Einspannen auftretende Biegespannung erkannt werden.

## Patentansprüche

1. System zum Messen einer Dehnung eines Messobjekts (8), mit zumindest einer Dehnungsmessvorrichtung (10), die ein Gehäuse (12), welches einen allseitig abgeschlossenen mit einer Flüssigkeit (16) und/oder einem duktilen Feststoff gefüllten Innenraum (14) begrenzt, und zumindest ein Dehnungsmesselement (24) zur Erfassung einer Verformung des Gehäuses (12), welches in dem Innenraum (14) angeordnet ist und zumindest abschnittsweise an einer Innenwand (22) des Gehäuses (12) anliegt, aufweist,
**dadurch gekennzeichnet, dass**
das System eine Halterung aufweist, welche die Dehnungsmessvorrichtung (10) an das Messobjekt (8) anpresst, wobei ein Anpressdruck (P) derart groß ist, dass eine Dehnung des Messobjekts (8) aufgrund von Haftreibung zwischen der Dehnungsmessvorrichtung (10) und dem Messobjekt (8) auf die Dehnungsmessvorrichtung (10) übertragen wird, und
wobei die Halterung ein elastisches Element (114) umfasst, welches den Anpressdruck (P) zumindest zum Teil erzeugt, wobei der Anpressdruck (P) einstellbar ist.

2. System nach Anspruch 1,
**dadurch gekennzeichnet, dass**
das elastische Element (114) eine, insbesondere metallische, Feder oder ein Polymerkissen umfasst.

3. System nach einem der Ansprüche 1 oder 2,
**dadurch gekennzeichnet, dass**
die Halterung zumindest eine Klemmvorrichtung (60), insbesondere eine Zwinge, aufweist, die dazu ausgebildet ist, mit einem Befestigungsmittel, insbesondere einer Befestigungsschraube (80), zusammenzuwirken und die Dehnungsmessvorrichtung (10) an das Messobjekt (8) anzupressen.

4. System nach Anspruch 3,
**dadurch gekennzeichnet, dass**
das Befestigungsmittel (80) einen Abstützstempel (116) aufweist, an dem zumindest eine Dehnungsmessvorrichtung (10) drehfest fixiert ist, wobei das Befestigungsmittel (80) einen Drehmechanismus (118) zum Einstellen des Anpressdrucks (P), mit welchem das Befestigungsmittel (80) die Dehnungsmessvorrichtung (10) an das Messobjekt (8) andrückt, aufweist, wobei der Drehmechanismus (118) zumindest abschnittsweise relativ zum Abstützstempel (116) drehbar ist,
wobei der Drehmechanismus (118) insbesondere eine Schraube und eine an der Schraube drehbar gelagerte Mutter umfasst, wobei bevorzugt mittels der Schraube und der Mutter der Anpressdruck (P) einstellbar ist.

5. System nach einem der Ansprüche 1 bis 4,
**dadurch gekennzeichnet, dass**
die Halterung ein drehfest an das Messobjekt (8) angebrachtes Aufnahmeelement (120) aufweist, das dazu ausgebildet ist, ein Halteelement (122), insbesondere eine Schraube, an dem die Dehnungsmessvorrichtung (10) gelagert ist, aufzunehmen,
wobei das Aufnahmeelement (120) bevorzugt als eine Fassung, insbesondere als eine Mutter, mit einem Innengewinde (124) ausgebildet ist und das Halteelement (122) bevorzugt ein Außengewinde (126) aufweist, das mit dem Innengewinde (124) der Fassung (120) zusammenwirkt, um die Dehnungsmessvorrichtung (10) an das Messobjekt (8) anzupressen.

6. System nach Anspruch 5,
**dadurch gekennzeichnet, dass**
ein Sicherungselement (128), insbesondere ein Sicherungsstift, vorgesehen ist, der das Halteelement (122) in dem Aufnahmeelement (120) in einer definierten Ausrichtung relativ zum Messobjekt (8) sichert,
wobei das Aufnahmeelement (120) bevorzugt zumindest zwei einander gegenüberliegende Nuten (130) aufweist, die dazu ausgebildet sind, das Sicherungselement (128) aufzunehmen.

7. System nach einem der Ansprüche 1 bis 6,
**dadurch gekennzeichnet, dass**
die Halterung ein Ummantelungselement (132) und zumindest ein Befestigungselement (134), insbesondere eine Befestigungsschraube, umfasst, wobei das Ummantelungselement (132) dazu ausgebildet ist, das Messobjekt (8) zumindest abschnittsweise zu umgeben, mit dem Befestigungselement (132) zusammenzuwirken und zumindest eine Dehnungsmessvorrichtung (10) an das Messobjekt (8) anzupressen,
wobei das Ummantelungselement (132) insbesondere zumindest zwei Mantelteile (136) umfasst, die durch zumindest ein Verbindungselement (138), insbesondere ein Scharnier, beweglich miteinander verbindbar sind.

8. System nach einem der Ansprüche 1 bis 7,
**dadurch gekennzeichnet, dass**
das Dehnungsmesselement (24) vollständig an der Innenwand (22) des Gehäuses (12) anliegt, und/oder dass
der Innenraum (14) vollständig mit der Flüssigkeit (16) und/oder dem duktilen Feststoff gefüllt ist, wobei die Flüssigkeit (16) und/oder der duktile Feststoff mit dem Dehnungsmesselement (24) zumindest bereichsweise in Kontakt ist.

9. System nach einem der Ansprüche 1 bis 8,
**dadurch gekennzeichnet, dass**
die Flüssigkeit (16) eine viskose Flüssigkeit, insbesondere ein Öl, ist,
und/oder dass der duktile Feststoff einen Kunststoff, ein Metall und/oder ein Silikon umfasst.

10. System nach einem der Ansprüche 1 bis 9,
**dadurch gekennzeichnet, dass**
das Gehäuse (12) zwei zumindest abschnittsweise zueinander symmetrische Halbschalen (18, 20) umfasst, wobei die Halbschalen (18, 20) miteinander verschweißt und/oder verklebt sind, wobei das Gehäuse (12) bevorzugt aus einem Metall, insbesondere Aluminium, und/oder einem Kunststoff, insbesondere einem Polyimid, gefertigt ist.

11. System nach einem der Ansprüche 1 bis 10,
**dadurch gekennzeichnet, dass**
eine Außenwand des Gehäuses (12), die der Innenwand (22) zugeordnet ist, an welcher das Dehnungsmesselement (24) anliegt, zumindest abschnittsweise eben ist, wobei sich das Dehnungsmesselement (24) entsprechend einer Verformung der Außenwand und/oder der Innenwand (22) verformt, und/oder dass
an einer dem Dehnungsmesselement (24) entgegengesetzten Außenwand des Gehäuses (12) eine Druckplatte (28) vorgesehen ist, welche zum Anpressen des Gehäuses (12) an ein Messobjekt (8) ausgebildet ist.

12. System nach einem der Ansprüche 1 bis 11,
**dadurch gekennzeichnet, dass**
zumindest ein zusätzlicher Sensor (36) vorgesehen ist, insbesondere ein Temperatursensor und/oder ein Drucksensor, wobei der zusätzliche Sensor (36) ein Drucksensor ist, wobei die Dehnungsmessvorrichtung (10) ausgebildet ist, ein Signal auszugeben, wenn der Druck im Innenraum (14) zumindest einen vorbestimmten Schwellenwert übersteigt.

13. Verfahren zur Verwendung eines Systems gemäß zumindest einem der Ansprüche 1 bis 12, bei welchem
- zumindest eine Dehnungsmessvorrichtung (10) mittels einer Halterung an ein Messobjekt (8) angepresst wird,
- das Messobjekt (8) zunächst in einem ersten Bereich in einer Einspannvorrichtung befestigt wird,
- nach dem Befestigen in dem ersten Bereich eine Messung der Dehnung des Messobjekts (8) erfolgt,
- das Messobjekt (8) anschließend auch in einem zweiten Bereich in einer Einspannvorrichtung befestigt wird,
- nach dem Befestigen in dem zweiten Bereich eine weitere Messung der Dehnung des Messobjekts (8) erfolgt,
wobei insbesondere nach der weiteren Messung die zumindest eine Dehnungsmessvorrichtung (10) und die Halterung von dem Messobjekt (8) entfernt werden und anschließend ein Wöhlerversuch mit dem Messobjekt (8) durchgeführt wird.

## Claims

1. A system for measuring a strain of a measurement object (8) comprising at least one strain measurement apparatus (10) that has a housing (12), which bounds an inner space (14) closed at all sides and filled with a liquid (16) and/or a ductile solid, and at least one strain measurement element (24) for detecting a deformation of the housing (12) that is arranged in the inner space (14) and at least sectionally contacts an inner wall (22) of the housing (12),
**characterized in that**
the system has a holder which presses the strain measurement apparatus (10) against the measurement object (8), with a contact pressure (P) being so large that a strain of the measurement object (8) due to static friction between the strain measurement apparatus (10) and the measurement object (8) is transmitted to the strain measurement apparatus (10), and with the holder comprising an elastic element (114) which at least partly generates the contact pressure (P), with the contact pressure (P) being settable.

2. A system in accordance with claim 1,
**characterized in that**
the elastic element (114) comprises a spring, in particular a metallic spring, or a polymer pad.

3. A system in accordance with one of the claims 1 or 2,
**characterized in that**
the holder has at least one clamping apparatus (60), in particular a clamp, which is configured to cooperate with a fastening means, in particular a fastening screw (80), and to press the strain measurement apparatus (10) against the measurement object (8).

4. A system in accordance with claim 3,
**characterized in that**
the fastening means (80) has a support plunger (116) to which at least one strain measurement apparatus (10) is rotationally fixedly fastened, with the fastening means (80) having a rotary mechanism (118) for setting the contact pressure (P) with which the fastening means (80) presses the strain measurement apparatus (10) against the measurement object (8), with the rotary mechanism (118) being at least sectionally rotatable relative to the support plunger (116),
with the rotary mechanism (118) in particular comprising a screw and a nut rotatably supported at the screw, with the contact pressure (P) preferably being settable by means of the screw and the nut.

5. A system in accordance with any one of the claims 1 to 4,
**characterized in that**
the holder has a receiving element (120) which is rotationally fixedly attached to the measurement object (8) and is configured to receive a holding element (122), in particular a screw, at which the strain measurement apparatus (10) is supported,
with the receiving element (120) preferably being configured as a receptacle, in particular as a nut, having an internal thread (124) and the holding element (122) preferably having an external thread (126) which cooperates with the internal thread (124) of the receptacle (120) to press the strain measurement apparatus (10) against the measurement object (8).

6. A system in accordance with claim 5,
**characterized in that**
a securing element (128), in particular a securing pin, is provided which secures the holding element (122) in the receiving element (120) in a defined orientation relative to the measurement object (8),
with the receiving element (120) preferably comprising at least two mutually oppositely disposed grooves (130) which are configured to receive the securing element (128).

7. A system in accordance with any one of the claims 1 to 6,
**characterized in that**
the holder comprises a sheathing element (132) and at least one fastening element (134), in particular a fastening screw, with the sheathing element (132) being configured to at least sectionally surround the measurement object (8), to cooperate with the fastening element (134) and to press at least one strain measurement apparatus (10) against the measurement object (8),
with the sheathing element (132) in particular comprising at least two jacket parts (136) which can be movably connected to one another by at least one connection element (138), in particular a hinge.

8. A system in accordance with any one of the claims 1 to 7,
**characterized in that**
the strain measurement element (24) completely contacts the inner wall (22) of the housing (12), and/or **in that**
the inner space (14) is completely filled with the liquid (16) and/or the ductile solid, with the liquid (16) and/or the ductile solid being at least regionally in contact with the strain measurement element (24).

9. A system in accordance with any one of the claims 1 to 8,
**characterized in that**
the liquid (16) is a viscous liquid, in particular an oil, and/or **in that** the ductile solid comprises a plastic, a metal and/or a silicone.

10. A system in accordance with any one of the claims 1 to 9,
**characterized in that**
the housing (12) comprises two half-shells (18, 20) which are at least sectionally symmetrical to one another, with the half-shells (18, 20) being welded and/or adhesively bonded to one another, with the housing (12) preferably being made of a metal, in particular aluminum, and/or a plastic, in particular a polyimide.

11. A system in accordance with any one of the claims 1 to 10,
**characterized in that**
an outer wall of the housing (12), which is associated with the inner wall (22) which the strain measurement element (24) contacts, is at least sectionally planar, with the strain measurement element (24) being deformed in accordance with a deformation of the outer wall and/or the inner wall (22), and/or **in that**
a pressure plate (28) is provided at an outer wall of the housing (12) opposite the strain measurement element (24) and is configured to press the housing (12) against a measurement object (8).

12. A system in accordance with any one of the claims 1 to 11,
**characterized in that**
at least one additional sensor (36) is provided, in particular a temperature sensor and/or a pressure sensor, with the additional sensor (36) being a pressure sensor, with the strain measurement apparatus (10) being configured to output a signal if the pressure in the inner space (14) exceeds at least one predetermined threshold value.

13. A method of manufacturing a system in accordance with at least one of the claims 1 to 12, in which
- at least one strain measurement apparatus (10) is pressed against a measurement object (8) by means of a holder,
- the measurement object (8) is first fastened in a first region in a clamping device,
- after the fastening in the first region, a measurement of the strain of the measurement object (8) takes place,
- the measurement object (8) is subsequently also fastened in a second region in a clamping device,
- after the fastening in the second region, a further measurement of the strain of the measurement object (8) takes place,
wherein, in particular after the further measurement, the at least one strain measurement apparatus (10) and the holder are moved away from the measurement object (8) and a Wöhler test is subsequently performed with the measurement object (8).

## Revendications

1. Système de mesure d'un allongement d'un objet à mesurer (8), comportant au moins un dispositif de mesure d'allongement (10) qui comprend un boîtier (12) délimitant un espace intérieur (14) fermé de tous côtés et rempli d'un liquide (16) et/ou d'une matière solide ductile, et qui comprend au moins un élément de mesure d'allongement (24) destiné à détecter une déformation du boîtier (12), lequel est disposé dans l'espace intérieur (14) et s'applique au moins localement contre une paroi intérieure (22) du boîtier (12),
**caractérisé en ce que**
le système comprend un support qui presse le dispositif de mesure d'allongement (10) contre l'objet à mesurer (8), une pression de pressage (P) étant telle qu'un allongement de l'objet à mesurer (8) est transmis au dispositif de mesure d'allongement (10) en raison d'un frottement statique entre le dispositif de mesure d'allongement (10) et l'objet à mesurer (8), et le support comprenant un élément élastique (114) qui génère au moins en partie la pression de pressage (P), la pression de pressage (P) étant réglable.

2. Système selon la revendication 1,
**caractérisé en ce que**
l'élément élastique (114) comprend un ressort, en particulier métallique, ou un coussin polymère.

3. Système selon l'une des revendications 1 ou 2,
**caractérisé en ce que**
le support comporte au moins un dispositif de coincement (60), en particulier un serre-joint, réalisé pour coopérer avec un moyen de fixation, en particulier avec une vis de fixation (80), et pour presser le dispositif de mesure d'allongement (10) contre l'objet à mesurer (8).

4. Système selon la revendication 3,
**caractérisé en ce que**
le moyen de fixation (80) comprend un poinçon d'appui (116) sur lequel au moins un dispositif de mesure d'allongement (10) est fixé solidairement en rotation, le moyen de fixation (80) comprenant un mécanisme de rotation (118) pour régler la pression de pressage (P) avec laquelle le moyen de fixation (80) presse le dispositif de mesure d'allongement (10) contre l'objet à mesurer (8), le mécanisme de rotation (118) pouvant tourner au moins localement par rapport au poinçon d'appui (116),
le mécanisme de rotation (118) comprenant en particulier une vis et un écrou monté de façon mobile en rotation sur la vis, de préférence, la vis et l'écrou permettant de régler la pression de pressage (P).

5. Système selon l'une des revendications 1 à 4,
**caractérisé en ce que**
le support comprend un élément de réception (120) fixé solidairement en rotation sur l'objet à mesurer (8) et réalisé pour recevoir un élément de maintien (122), en particulier une vis, sur lequel est monté le dispositif de mesure d'allongement (10),
l'élément de réception (120) étant réalisé de préférence sous la forme d'une monture, en particulier d'un écrou, présentant un taraudage (124), et l'élément de maintien (122) présentant de préférence un filetage (126) qui coopère avec le taraudage (124) de la monture (120) pour presser le dispositif de mesure d'allongement (10) contre l'objet à mesurer (8).

6. Système selon la revendication 5,
**caractérisé en ce que**
il est prévu un élément de blocage (128), en particulier une goupille de blocage, qui bloque l'élément de maintien (122) dans l'élément de réception (120) dans une orientation définie par rapport à l'objet à mesurer (8), l'élément de réception (120) présentant de préférence au moins deux rainures (130) opposées l'une à l'autre, adaptées pour recevoir l'élément de blocage (128).

7. Système selon l'une des revendications 1 à 6,
**caractérisé en ce que**
le support comprend un élément d'enrobage (132) et au moins un élément de fixation (134), en particulier une vis de fixation, l'élément d'enrobage (132) étant réalisé pour entourer au moins localement l'objet à mesurer (8), pour coopérer avec l'élément de fixation (132) et pour presser au moins un dispositif de mesure d'allongement (10) contre l'objet à mesurer (8),
l'élément d'enrobage (132) comprenant en particulier au moins deux parties enveloppes (136) susceptibles d'être reliées entre elles de manière mobile par au moins un élément de liaison (138), en particulier une charnière.

8. Système selon l'une des revendications 1 à 7,
**caractérisé en ce que**
l'élément de mesure d'allongement (24) s'applique entièrement contre la paroi intérieure (22) du boîtier (12), et/ou **en ce que**
l'espace intérieur (14) est entièrement rempli du liquide (16) et/ou de la matière solide ductile, le liquide (16) et/ou la matière solide ductile étant au moins localement en contact avec l'élément de mesure d'allongement (24).

9. Système selon l'une des revendications 1 à 8,
**caractérisé en ce que**
le liquide (16) est un liquide visqueux, en particulier une huile, et/ou **en ce que**
la matière solide ductile comprend une matière plastique, un métal et/ou un silicone.

10. Système selon l'une des revendications 1 à 9,
**caractérisé en ce que**
le boîtier (12) comprend deux demi-coques (18, 20) au moins localement symétriques l'une par rapport à l'autre,
les demi-coques (18, 20) étant soudées et/ou collées entre elles,
le boîtier (12) étant de préférence fabriqué en un métal, en particulier en aluminium, et/ou en une matière plastique, en particulier en un polyimide.

11. Système selon l'une des revendications 1 à 10,
**caractérisé en ce que**
une paroi extérieure du boîtier (12) associée à la paroi intérieure (22) contre laquelle s'applique l'élément de mesure d'allongement (24) est au moins localement plane, l'élément de mesure d'allongement (24) se déformant en fonction d'une déformation de la paroi extérieure et/ou de la paroi intérieure (22), et/ou **en ce que**
une plaque de pression (28) est prévue sur une paroi extérieure du boîtier (12) opposée à l'élément de mesure d'allongement (24), plaque qui est réalisée pour presser le boîtier (12) contre un objet à mesurer (8).

12. Système selon l'une des revendications 1 à 11,
**caractérisé en ce que**
il est prévu au moins un capteur supplémentaire (36), en particulier un capteur de température et/ou un capteur de pression,
le capteur supplémentaire (36) étant un capteur de pression, le dispositif de mesure d'allongement (10) étant réalisé pour émettre un signal lorsque la pression dans l'espace intérieur (14) dépasse au moins une valeur de seuil prédéterminée.

13. Procédé d'utilisation d'un système selon l'une au moins des revendications 1 à 12, dans lequel
- au moins un dispositif de mesure d'allongement (10) est pressé contre un objet à mesurer (8) au moyen d'un support,
- l'objet à mesurer (8) est d'abord fixé dans une première zone dans un dispositif de serrage,
- après la fixation dans la première zone, une mesure de l'allongement de l'objet à mesurer (8) est effectuée,
- l'objet à mesurer (8) est ensuite également fixé dans une deuxième zone dans un dispositif de serrage,
- après la fixation dans la deuxième zone, une autre mesure de l'allongement de l'objet à mesurer (8) est effectuée,
sachant que, après l'autre mesure, ledit au moins un dispositif de mesure d'allongement (10) et le support sont retirés de l'objet à mesurer (8), puis un essai de Wöhler est effectué sur l'objet à mesurer (8).
